Europäisches Patentamt

European Patent Office

Office européen des brevets

(19)

(11) Veröffentlichungsnummer: **0 224 443**
**B1**

# (12) EUROPÄISCHE PATENTSCHRIFT

(45) Veröffentlichungstag der Patentschrift:
04.10.89

(21) Anmeldenummer: 86810521.4

(22) Anmeldetag: 17.11.86

(51) Int. Cl.⁴: **B01D 13/04, C25F 3/04**

(54) Verfahren zur Herstellung eines Mikrofilters.

(30) Priorität: 25.11.85  CH 5008/85

(43) Veröffentlichungstag der Anmeldung:
03.06.87 Patentblatt 87/23

(45) Bekanntmachung des Hinweises auf die Patenterteilung:
04.10.89 Patentblatt 89/40

(84) Benannte Vertragsstaaten:
AT BE CH DE ES FR GB GR IT LI LU NL SE

(56) Entgegenhaltungen:
DE-A- 3 120 086
US-A- 3 850 762

(73) Patentinhaber: Schweizerische Aluminium AG,
CH-8212 Neuhausen am Rheinfall(CH)

(72) Erfinder: Textor, Marcus, Abendstrasse 15,
CH-8200 Schaffhausen(CH)
Erfinder: Werner, Martin, Hansjakobstrasse 16,
D-7700 Singen(DE)
Erfinder: Franschitz, Wilhelm, Bücheierstrasse 12,
CH-8212 Neuhausen(CH)

EP 0 224 443 B1

**Beschreibung**

Die Erfindung betrifft eine Verfahren zur Herstellung eines Mikrofilters aus einer rekristallisierten Aluminiumfolie mittels elektrolytischer Aetzung.

Mikrofilter als teildurchlässige Membrane werden bei einer Reihe von Trennverfahren eingesetzt, bei denen in einem flüssigen oder gasförmigen Medium suspendierte Teilchen einer Mindestgrösse von 0,02 bis 10 µm Durchmesser separiert werden sollen. Mittels solcher Mikrofilter werden beispielsweise Baktieren aus Wasser, welches die Membran unter Druckeinfluss von ca. 0,1 MPa durchtritt, zurückgehalten.

Die bisher dazu eingesetzten Membrane basieren zumeist auf Polymer-Folien und -Hohlfibern. Diesen haften jedoch einige Mängel an, welche sich für gewisse Anwendungen gravierend auswirken: beschränkte thermische Stabilität (verunmöglicht teilweise eine Sterilisation); beschränkte Stabilität in organischen Lösungsmitteln, Quellung in Wasser, zumeist fehlende elektrische Leitfähigkeit.

Zur teilweisen Abhilfe ist ein Verfahren zur Herstellung von Membranen mit Porendurchmesser von 0,2 bis 10 µm aus Aluminium bekannt (DE-A 3 120 086), bei welchem eine rekristallisierte Aluminiumfolie elektrolytisch geätzt wird, wobei in einer ersten Aetzstufe ein zeitlich konstantes Anodenpotential oberhalb des Lochfrasspotentials des Aluminums und in ei ner zweiten Aetzstufe ein zeitlich konstantes Anodenpotential unterhalb des Lochfrasspotentials eingesetzt wird. Zur weiteren Verengung der Poren wird vorgeschlagen, auf der geätzten Folie anodisch eine Aluminiumoxidschicht oder mittels Kochbehandlung in Wasser eine Aluminiumoxidhyratschicht zu erzeugen, womit Porendurchmesser ab 0,002 µm erreichbar sind.

Derart hergestellten Aluminiummembranen haften jedoch entscheidende Nachteile an:

Die potentiostatische Aetzung ist in der Praxis sehr schwierig zu kontrollieren. Insbesondere besteht die Gefahr, dass kleinste Abweichungen des effektiven Potentials vom optimalen Wert zu unerwünschtem Mikrolochfrass führen, welche die Verwendung als Membranfolien ausschliesst. Noch einschneidender ist die Tatsache, dass nach obgenanntem Verfahren hergestellte Membrane unstabil sind, sobald sie zur Filtration von wässrigen Medien oder nichtwässrigen Medien mit geringsten Wasseranteilen eingesetzt werden. Diese Unstabilität äussert sich in einem raschen Abfall des transmembranen Flusses zu Werten, die nach einigen Stunden typisch noch 5 bis 10 % des Anfangwertes betragen und damit für Mikrofiltrationsmembrane im Vergleich mit konventionellen Polymermembranfolien ungenügend und uninteressant sind. Dieser Abfall wird sowohl bei einseitig wie bei beidseitig geätzten Folien und sowohl bei blanken als auch bei formierten, mit einer anodischen Sperraluminiumoxidschicht versehenen Folien beobachtet.

Der Erfindung liegt daher die Aufgabe zugrunde, ein Verfahren zur Herstellung eines Mikrofilters bereitzustellen, welches von rekristallisierten Aluminiumfolien ausgeht, eine elektrolytische Aetzung einsetzt und die obgenannten Mängel -- Mikrolochfrass, Unstabilität -- beseitigt.

Erfindungsgemäss wird die Aufgabe dadurch gelöst, dass eine Aluminiumfolie von 20 bis 250 µm Dicke und einer Reinheit von mindestens 99,95 % nach einer rektristallisierenden Glühung mit stufenweise jeweils zeitlich konstanter Stromdichte im Bereich von 0,1 bis 2 kA/m² in einem Elektrolyt geätzt wird und zur Stabilisierung der Oberfläche Hydratationsreaktions-verhindernd nachbehandelt wird.

Die Aetzung kann in einer oder mehreren Stufen erfolgen. Innerhalb jeder Stufe muss die Stromdichte jedoch konstant gehalten werden, wobei in der Praxis Stromdichteabweichungen von weniger als 5 % die Bezeichnung "konstant" noch zulassen. Diese galvanostatische Vorgehen ermöglicht die Vermeidung von Mikrolochfrass. Es hat sich herausgestellt, dass bei einem Einsatz von Folien mit einem Aluminiumgehalt von mindestens 99,95 %, vorzugsweise mindestens 99,98 % die Gleichmässigkeit und Reproduzierbarkeit von gewünschten Porengrössen und -formen besonders hoch ausfällt. Zur Ermöglichung der im Filterbetrieb erforderlichen Durchflussrate, sowie zur Erleichterung der gleichmässigen Aetzung darf die Aluminiumfolie höchstens eine Dicke von 250 µm aufweisen. Damit wird vermieden, dass beim Trennverfahren die allfällig benötigte Druckdifferenz über der Membran zu hoch wird. Folien einer Dicke von weniger als 20 µm weisen eine ungenügende mechanische Stabilität auf und zeigen eine erhöhte Gefahr unkontrollierter Durchätzung.

Zur Vermeidung einer sich in einem zeitlichen Abfall des transmembranen Flusses äussernden Unstabilität, haben sich Hydratationsreaktions-verhindernde stabilisierende Nachbehandlungen als notwendig und wirksam herausgestellt.

Die Aetzung kann in mehreren hintereinander zu durchlaufenden Bädern oder auch in einem Bad ggf. mit mehreren hintereinander zu durchlaufenden Zonen erfolgen. Erfindungsgemäss ist jedoch darauf zu achten, dass in jeder Stufe galvanostatisch geätzt wird. Die dabei insgesamt umgesetzte Ladung soll 0,15 bis 0,5 MC/m² betragen. Die Badtemperatur hat zwischen 60 und 100 °C zu liegen. Als Elektrolyt im Rahmen der Erfindung hat sich folgende Zusammensetzung als besonders geeignet erwiesen:

Chlorid-Konzentration 0,05 bis 4 M, vorzugsweise 0,1 bis 2 M; Konzentration an freien Säuren 0,05 bis 2 M, vorzugsweise 0,1 bis 1M, inbesondere HCl oder Alkalichloride; Konzentration an Aluminiumionen 0,05 bis 0,6 M, vorzugsweise 0,1 bis 0,35 M (M: = Mol/Liter).

Eine bevorzugte Ausführung der erfindungsgemässen Aetzung besteht aus 2 Stufen oder 2 Gruppen von Stufen, wobei die Stromdichte in der ersten Stufe bzw. der ersen Stufen-Gruppe das 1,5 bis 5-fache der Stromdichte in der zweiten Stufe bzw. der zweiten Stufengruppe beträgt. Dies führt zu einer be-

2

sonders dichten und gleichförmigen Ausbildung der geätzten Poren.

Eine im Rahmen der Erfindung liegende zusätzliche Massnahme zur Verhinderung eines vorzeitigen Abfalls des transmembranen Flusses besteht darin, die Aluminiumfolien nur einem einseitigen Aetzangriff auszusetzen, beispielsweise indem die andere Folienseite mit einer ätzrestistenten Schicht bedeckt wird, welche anschliessend abgelöst wird. Die hierbei entstehenden, die ganze Foliendicke durchlaufenden Poren weisen einen mit fortschreitender Aetztiefe abnehmenden Querschnitt auf. Beim Einsatz als Mikrofilter wird der Filterfluss entgegengesetzt zur ursprünglichen Aetzrichtung angelegt. Porenquerschnittsverminderungen durch mit der Porentiefe zunehmenden Ablagerungen werden so durch den anfänglich zunehmenden Porenquerschnitt kompensiert. Bei einer zweckmässigen Ausführung dieses Verfahrens wird die Höchstdicke der Aluminiumfolie auf120 μm beschränkt.

Zur einfacheren Erzielung von Porendurchmessern im für Mikrofilter untersten Bereich von einigen Hundertstel μm sieht eine erfindungsgemässe Ausgestaltung des Verfahrens vor, die geätzten Poren vor der stabilisierenden Nachbehandlung durch anodische Oxidation in einem Sperrschichtelektrolyt zu verengen. Hierzu können die bekannten Formierelektrolyten wie Borsäure, Citronensäure, Adipinsäure u.a. verwendet werden. Pro 0,1 μm Porendurchmesserverengung muss eine Badspannung von etwa 70 V angelegt werden. Diese Vorbehandlung unterstützt zudem bei einigen der erfindungsgemässen Nachbehandlungen die stabilisierende Wirkung.

Eine weitere zweckmässige, die Stabilisierung der Nachbehandlung verstärkende Ausgestaltung des Verfahrens umfasst eine dieser Nachbehandlung vorgeschaltete Aufbringung einer Böhmitschicht auf die geätzte und ggf. mit einer Sperrshicht versehene Folienoberfläche.

Die Hydratationsreaktions-verhindernde, stabilisierende Nachbehandlung wird bevorzugt aus folgender Gruppe von Behandlungen ausgewählt:
- Anodisation in einem Elektrolyt mit einer Leitfähigkeit von 1 bis 20 mS, welcher aus einer wässrigen Lösung von $(NH_4)H_2PO_4$ besteht. Die Badtemperatur soll hierbei 60 bis100 °C betragen. Die anzulegende Spannung liegt zwischen 10 und 500 V.
- Eintauchen in eine Phosphatlösung mit einer Konzentration von 0,5 bis 5 % $(NH_4)H_2PO_4$ während 1 bis 30 Minuten bei einer Badtemperatur von 60 bis 100 °C. Eine bevorzugte Ausführung besteht im Durchströmenlassen dieser Lösung durch die geätzte und ggf. mit einer Sperrschicht versehenen Folie.
- Eintauchen in eine Silikatlösung, bspw. Alkalisilikate, in eine Chromatlösung, bspw. Alkalichromate, oder in eine Chromphosphatlösung.
- Bedeckung der gesamten Folienoberfläche mit einer chemisch stabilen Oxidschicht; im Rahmen der Erfindung besonders geeignet sind $SiO_2$- oder $TiO_2$-Schichten. Das entsprechende Verfahren besteht in der Abscheidung einer organischen Si- bzw. Ti-Verbindung, vorzugsweise vom Typ $Si(OR)_4$ bzw. $Ti(OR)_4$, gelöst in einem geeigneten Lösungsmittel, welches auf die Folienoberfläche aufgebracht wird. Anschliessend wird das Lösungsmittel abgedampft und die zurückbleibende organische Verbindung thermisch zum entsprechenden Oxid oder zu einem Mischoxid mit Aluminium zersetzt. Hierzu eignen sich blank, böhmitisierte oder mit einer Sperroxidschicht versehene Folien. Ein weiteres erfindungsgemäss bevorzugtes Verfahren zur Bedeckung mit der Oxidschicht besteht im Transportieren einer organischen Si- bzw. Ti-Verbindung mittels eines wasserfreien Trägers auf die blanke, böhmitisierte oder mit einer Sperroxidschicht versehene Folienoberfläche und anschliessender Umwandlung der Si- bzw. Ti-Verbindung in $SiO_2$ bzw. $TiO_2$ durch Hydrolyse.

Weitere Vorteile, Merkmale und Einzelheiten der Erfindung ergeben sich aus der nachfolgenden Beschreibung bevorzugter Ausführungsbeispiele.

Eine 75 μm dicke, rekristallisierend weichgeglühte Folie mit 99,99 Gew.-% Aluminium wurde galvanostatisch in 2 Stufen -- mit 0,7 kA/m² in der ersten und 0,2 kA/m² in der 2. Stufe -- unter Umsetzung von 0,3 MC/m² bei 95 °C in einer Chloridlösung mit einer Cl⁻- Konzentration von 0,8 M und einer HCl- und $Al^{3+}$-Konzentration von je 0,2 M geätzt und anschliessende gespült. Zur Bestimmung des Transmembranflusses wurden in foglende 4 Varianten Mikrofilter hergestellt, durch welche ultrafiltriertes, bidestilliertes Wasser während je 2 Stunden unter Anwendung eines Drucks von 0,05 MPa floss.

Als Variante A wurde die Folie getrocknet und ohne weitere Nachbehandlung wie ein Mikrofilter eingesetzt. Zu Beginn des Durchströmversuchs betrug der Transmembramfluss (TMF) 1,17 m³/m² h. Nach 2 Studnen fiel der TMF um 65 %.

Als erfindungsgemässe Variante B wurde die Oxidschicht der geätzten Folie im durchströmenden Medium mit einer $(NH_4)H_2PO_4$-Konzentration von 2,7 % während 2 Minuten bei 85 °C stabilisiert. Der TMF fiel innert 2 Stunden um lediglich 19 %.

Als Variante C wurde die gespülte Folie hydratisiert, in einem Borsäureelektrolyt auf 400 V formiert, gespült und getrocknet. Der innert 2 Stunden erlittene TMF-Abfall betrug 82 %.

Als erfindungsgemässe Variante D wurde die gespülte Folie hydratisiert in einem Elektrolyt mit 1 % $(NH_4)H_2PO_4$ und einer Leitfähigkeit von 7 mS bei 85 °C auf 20 V formiert, gespült und getrocknet. Die beim Durchströmversuch innert 2 Stunden eingetretene TMF-Reduktion betrug nur 8 %.

In der folgenden Tabelle ist der TMF der 4 Varianten zu Beginn des Durchströmversuchs, nach einer halben und nach 2 Stunden zusammengestellt; in m³/m² h.

|  | A | B | C | D | |
|---|---|---|---|---|---|
| 0 h | 1,17 | 1,12 | 1,08 | 1,28 | |
| 1/2 h | 0,77 | 1,05 | 0,49 | 1,27 | |
| 2 h | 0,41 | 0,91 | 0,19 | 1,17 | |
| 0→2 h | −65 | −19 | −82 | −8 | (Änderung in %) |

Der wesentlich geringere Abfall des TMF über die Versuchsdauer bei den erfindungsgemässen Varianten B und D im Vergleich mit den Varianten A und C zeigt, dass die erfindungsgemäsen Nachbehandlungen die Tendenz zu unzulässiger Verengung der Poren durch Hydratation der Oxidschicht erfolgreich zu verringern mag.

**Patentansprüche**

1. Verfahren zur Herstellung eines Mikrofilters aus einer rektristallisierten Aluminiumfolie mittels elektrolytischer Aetzung,
dadurch gekennzeichnet,
dass eine Aluminiumfolie von 20 bis 250 µm Dicke und einer Reinheit von mindestens 99,95 % nach der rekristallisierenden Glühung mit stufenweise jeweils zeitlich konstanter Stromdichte im Bereich von 0,1 bis 2 kA/m² in einem Elektrolyt geätzt wird und zur Stabilisierung der Oberfläche Hydratationsreaktionsverhindernd nachbehandelt wird.

2. Verfahren nach Anspruch 1, dadurch gekennzeichnet, dass eine Aluminiumfolie von 20 bis 120 µm Dicke verwendet und nur von einer Seite her geätzt wird.

3. Verfahren nach Anspruch 1 oder 2, dadurch gekennzeichnet, dass die geätzten Poren vor der stabilisierenden Nachbehandlung durch anodische Oxidation in einem Sperrshichtelektrolyt verengt werden.

4. Verfahren nach wengistens einem der Ansprüche 1 bis 3, dadurch gekennzeichnet, dass vor der stabilisierenden Nachbehandlung eine Böhmitschicht aufgebracht wird.

5. Verfahren nach wenigstens einem der Ansprüche 1 bis 4, dadurch gekennzeichnet, dass die Aetzung in 2 Stufen durchgeführt wird, wobei die Stromdichte in der 1. Stufe das 1,5 bis 5- fache derjenigen in der 2. Stufe beträgt.

6. Verfahren nach wenigstens einem der Ansprüche 1 bis 5, dadurch gekennzeichnet, dass die stabilisierende Nachbehandlung aus mindestens einem Vertreter der folgenden Gruppe Hydratationsreaktions-verhindernder Behandlungen besteht:
a) anodische Oxidation in einem Elektrolyt, bestehend aus einer wässrigen Lösung von $(NH_4)H_2PO_4$ mit einer Leitfähigkeit von 1 bis 20 mS.
b) Eintauchen in eine Phosphatlösung mit einer Konzentration von 0,5 bis 5% $(NH_4)H_2PO_4$.
c) Eintauchen in eine Silikatlösung.
d) Eintauchen in eine Chromatlösung.
e) Eintauchen in eine Chromphosphatlösung.
f) Bedeckung der Folienoberfläche mit einer $SiO_2$-Schicht durch Abscheidung einer organischen Si-Verbindung aus einer Lösung und thermischer Zersetzung zum Oxid.
g) Bedeckung der Folienoberfläche mit einer $TiO_2$-Schicht durch Abscheidung einer organischen Ti-Verbindung aus einer Lösung und thermischer Zersetzung zum Oxid.
h) Bedeckung der Folienoberfläche mit einer $SiO_2$-Schicht durch Transport einer organischen Si-Verbindung mittels einer wasserfreien Trägers auf die Oberfläche der Folie, und anschliessender Umwandlung der Si-Verbindung in $SiO_2$ durch Hydrolyse.
i) Bedeckung der Folienoberfläche mit einer $TiO_2$-Schicht durch Transport einer organischen Ti-Verbindung mittels eines wasserfreien Trägers auf die Oberfläche der Folie, und anschliessender Umwandlung der Ti-Verbindung zu $TiO_2$ durch Hydrolyse.

**Revendications**

1. Procédé pour la fabrication d'un microfiltre à partir d'une feuille d'aluminium recristallisée, par attaque électrolytique, caractérisé, en ce qu'une feuille d'aluminium de 20 à 250 µm d'épaisseur et d'une pureté d'au moins 99,95% après le recuit de recristallisation, est attaquée par étapes dans un électrolyte avec chaque fois une densité de courant constante dans le temps dans l'intervalle de 0,1 à 2 kA/m², et soumise pour la stabilisation de la surface à un traitement ultérieur empêchant une réaction d'hydratation.

2. Procédé selon la revendication 1, caractérisé en ce que l'on utilise une feuille d'aluminium de 20 à 120 µm d'épaisseur et l'on attaque à partir d'une face.

3. Procédé selon la revendication 1 ou 2, caractérisé en ce que les pores formés par attaque sont rétrécis avant le post-traitement stabilisant par oxydation anodique dans un électrolyte à couche d'arrêt.

4

4. Procédé selon l'une au moins des revendications 1 à 3, caractérisé en ce que l'on applique une couche de boehmite avant le traitement ultérieur stabilisant.

5. Procédé selon l'une au moins des revendications 1 à 4, caractérisé en ce que l'attaque est mise en œuvre en 2 étapes, la densité de courant dans la première étape étant de 1,5 à 5 fois celle dans la seconde étape.

6. Procédé selon l'une au moins des revendications 1 à 5, caractérisé en ce que le traitement ultérieur stabilisant consiste en au moins un représentant du groupe suivant de traitements empêchant une réaction d'hydratation:

a) oxydation anodique dans un électrolyte consistant en une solution aqueuse de $(NH_4)H_2PO_4$ d'une conductivité de 1 à 20 mS.

b) Immersion dans une solution de phosphate d'une concentration de 0,5 à 5% de $(NH_4)H_2PO_4$.

c) Immersion dans une solution de silicate.

d) Immersion dans une solution de chromate.

e) Immersion dans une solution de phosphate de chrome.

f) Recouvrement de la surface de la feuille par une couche de $SiO_2$ par dépôt d'un composé organique de Si à partir d'une solution et décomposition thermique en oxyde.

g) Recouvrement de la surface de la feuille par une couche de $TiO_2$ par dépôt d'un composé organique de Ti à partir d'une solution et décomposition thermique en oxyde.

h) Recouvrement de la surface de la feuille par une couche de $SiO_2$ par transport d'un composé organique de Si au moyen d'un véhicule anhydre sur la surface de la feuille et ensuite transformation du composé de Si en $SiO_2$ par hydrolyse.

i) Recouvrement de la surface de la feuille par une couche de $TiO_2$ par transport d'un composé organique de Ti au moyen d'un véhicule anhydre sur la surface de la feuille et ensuite transformation du composé de Ti en $TiO_2$ par hydrolyse.

**Claims**

1. Process for manufacturing a microfilter from a recrystallized aluminium foil by means of electrolytic etching, characterized in that 20 to 250 µm thick aluminium foil having a purity of not less than 99.95% is etched after the recrystallizing anneal in steps, each of which is constant with time and comprises a current density in the range from 0.1 to 2 kA/m², in an electrolyte and is posttreated to stabilize the surface in a manner which prevents hydration reactions.

2. Process according to claim 1, characterized in that a 20 to 120 µm thick aluminium foil is used and is etched only from one side.

3. Process according to claim 1 or 2, characterized in that the etched pores are constricted before the stabilizing posttreatment by means of anodic oxidation in a barrier-layer electrolyte.

4. Process according to at least one of claims 1 to 3, characterized in that a boehmite layer is provided before the stabilizing posttreatment.

5. Process according to at least one of claims 1 to 4, characterized in that the etching is carried out in 2 steps, the current density in the 1st step being 1.5 to 5 times that in the 2nd step.

6. Process according to at least one of claims 1 to 5, characterized in that the stabilizing posttreatment comprises at least one representative of the following group of treatments which prevent hydration reactions:

a) Anodic oxidation in an electrolyte composed of an aqueous solution of $(NH_4)H_2PO_4$ having a conductivity of 1 to 20 mS.

b) Immersion in a phosphate solution having a concentration of 0.5 to 5% $(NH_4)H_2PO_4$.

c) Immersion in a silicate solution.

d) Immersion in a chromate solution.

e) Immersion in a chromium phosphate solution.

f) Coating of the foil surface with an $SiO_2$ layer by depositing an organic Si compound from a solution and thermally decomposing it to form the oxide.

g) Coating of the foil surface with a $TiO_2$ layer by depositing an organic Ti compound from a solution and thermally decomposing it to form the oxide.

h) Coating of the foil surface with an $SiO_2$ layer by transporting an organic Si compound by means of an anhydrous carrier onto the surface of the foil and subsequently converting the Si compound into $SiO_2$ by hydrolysis.

i) Coating of the foil surface with a $TiO_2$ layer by transporting an organic Ti compound by means of an anhydrous carrier onto the surface of the foil and subsequently converting the Ti compound into $TiO_2$ by hydrolysis.